# EUROPEAN PATENT APPLICATION

(11) **EP 1 582 434 A2**
(43) Date of publication of application: **05.10.2005**
(21) Application number: 05007025.9
(22) Date of filing: 31.03.2005
(51) Int. Cl.: B62B 9/00

(54) **Signalling apparatus**

(30) Priority: 01.04.2004 IT MO20040070
(71) Applicant: Esposito, Mario, 42100 Reggio Emilia (IT)
(72) Inventor: Esposito, Mario, 42100 Reggio Emilia (IT)
(74) Representative: Crugnola, Pietro

(57) **Abstract**

Apparatus (1), comprising rod means (3) associable with a portion (20; T1, T2) of a vehicle (2) and signalling means (8) associated with said rod means (3), characterised in that positioning means (4; 50) is interposed between said rod means (3) and said portion (20; T1, T2), said positioning means (4; 50) being such as to enable angular varying of a position (A, B, C) of said signalling means (8) in relation to said vehicle (2).

## Description

The invention relates to a signalling apparatus installable on vehicles of reduced dimensions for the transport of children and/or the disabled, in particular a pushchair or perambulator or a wheelchair.

These vehicles are substantially slow and not very visible and are therefore exposed, if conducted near a roadway, to a potential risk of being run over by other vehicles. This risk becomes significant when roadways are crossed and in particular in conditions of reduced ambient light, as may occur at night-time and/or because of unfavourable atmospheric conditions.

Numerous devices have thus been proposed aiming at making pushchairs and/or wheelchairs more visible. US 6394633 discloses a pushchair provided with a lighting device comprising a front lamp, for lighting the road, and small lamps located in a lateral and/or rear position, acting as "parking lights". US 6558018 discloses a net device, provided with flashers, which can be wrapped as a sleeve around a frame part of a pushchair.

A drawback of the devices provided for by US 6394633 and US 6558018 lies in the fact that the luminous elements are confined inside the outline of the overall dimensions of the pushchair. This means that any object having dimensions that are significantly greater than those of the pushchair may give the latter poor visibility, although it is able to produce light signals. This event may for example occur if the pushchair is conducted along a route that is parallel to a line of parked automobiles or along a sidewalk alongside a building near a corner of the latter. If the line of automobiles and/or the building are interposed between the pushchair and any vehicle approaching for example in a direction that is substantially at right angles to the travelling direction of the pushchair, the driver of the above-mentioned vehicle will be able to see the pushchair, even if lit, only when the latter has passed the line of automobiles or the building. At that moment, and especially if the driver is driving at a considerable speed, it could not be possible to stop the vehicle in time, with a significant risk of running over the pushchair.

Signalling devices have been proposed for wheelchairs and/or pushchairs in which the luminous elements are situated at a certain distance from the outline of the overall dimensions of the vehicle. DE 10040937 discloses a fixed vertical rod device, equipped with an end flasher and fittable on a vehicle of small dimensions, such as for example a pushchair. A drawback of this device consists of the fact that the rod may perform its signalling function exclusively in a vertical direction, thus being ineffective if a pushchair accidentally proceeds covered in relation to an observer by objects with a vertical extent such as to hide even the flasher. US 5791761 discloses a wheelchair equipped, amongst other things, with a vertical support rod at the top of which a battery-operated flasher is located, similar to that of emergency vehicles. The rod is removable from its own seat, and can therefore be placed at a certain distance from the seat to make signals. A drawback of this device lies in the fact that the rod should be handled either by the person conducting the wheelchair or by the disabled person sitting in the wheelchair. In the former case, the conducting person handling the rod should push and guide the wheelchair using a single hand, which is inconvenient and inopportune in terms of safety, whereas in the latter case, the disabled person could not be physically able to perform the required movements. Furthermore, the size of the movements with the rod that are performable by the conducting person and/or the disabled person could not be sufficient to indicate the presence of the wheelchair if the latter is hidden from the view of an observer by objects having considerable dimensions. Lastly, if it were desired to apply this device to a pushchair, it would not be possible to entrust a child with the rod inasmuch as the child would not have the strength and coordination required to perform the signalling movements appropriately.

An object of the invention is to improve the signalling apparatuses installable on vehicles of small dimensions for the transport of children' and/or the disabled, such as pushchairs, perambulators and/or wheelchairs.

Another object is to provide a signalling apparatus for vehicles of small dimensions for the transport of children and/or the disabled that can protrude in a substantially rapid and simple manner in a plurality of directions from the outline of the overall dimensions of these vehicles.

A further object is to provide a signalling apparatus for vehicles of small dimensions for the transport of children and/or the disabled that can be used with reduced physical effort and in conditions of extreme safety.

The invention provides for an apparatus, comprising rod means associable with a portion of a vehicle and signalling means associated with said rod means, characterised in that positioning means is interposed between said rod means and said portion, said positioning means being such as to enable angular varying of a position of said signalling means in relation to said vehicle.

Owing to this aspect, the signalling means, for example of the luminous type, can be variously oriented in relation to the vehicle on which it is installed, and in particular can be made to protrude both vertically and horizontally from the outline of the overall dimensions of the vehicle.

The invention can be better understood and implemented through reference to the attached drawings, which show an exemplifying but non-limitative embodiment thereof, in which:
Figure 1 is a side view showing a signalling apparatus installed on a vehicle of small dimensions for the transport of children;
Figure 2 is a fragmentary, incomplete and partially sectioned schematic side view of a constructional detail of the apparatus in Figure 1;
Figure 3 is a fragmentary and incomplete schematic side view of a further constructional detail of the apparatus in Figure 1;
Figure 4 is a fragmentary and incomplete schematic cross section of the apparatus in Figure 1;
Figure 5 is a fragmentary and incomplete schematic side view showing the apparatus in Figure 1 in use;
Figure 6 is a fragmentary and incomplete schematic cross section showing a further version of the apparatus in Figure 1;
Figure 7 is a fragmentary and incomplete schematic side view of the further version shown in Figure 6.

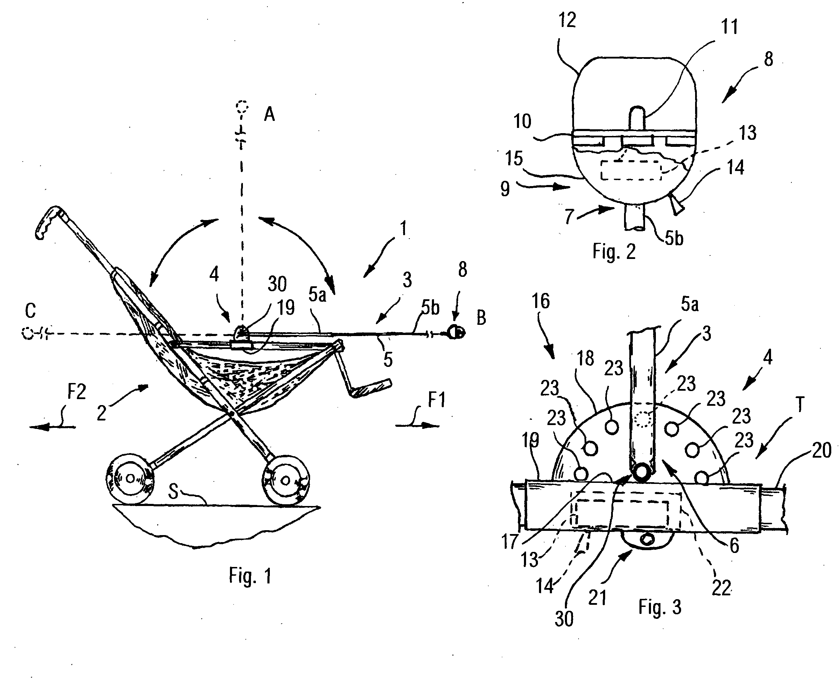

In Figures 1 to 5, a signalling apparatus 1 comprises a telescopic rod 3 associated with a vehicle 2, for example a pushchair for children, by means of a positioning device 4. The rod 3 consists of a plurality of segments 5, made shapingly coupled so as to be reciprocally insertable in a sliding manner. In this plurality of segments 5 a proximal segment 5a is comprised that at its proximal end 6 is hinged on the positioning device 4 through a known hinge means 30 and a distal segment 5b is comprised that, at its distal end 7 opposite the positioning device 4, is associated with a signalling device 8. The signalling device 8, which may be of the type that is able to emit light in an intermittent and/or continuous manner, comprises a hollow connecting element 9, approximately hemispherical, a convex face 15 of which faces the distal segment 5b. At the base of the connecting element 9 an electronic card 10 of the known type is inserted, on which a known light source 11 is inserted, for example a light emission diode (LED) or a series of diodes, facing in a direction opposite the connecting element 9. A diffuser element 12, made in the form of a coloured or uncoloured transparent cupola, is associated with the connecting element 9 in such a way as to enclose the electronic card 10 and the LED 11. The electronic card 10 and the LED 11 are supplied by a battery 13, indicated by a dotted line, received inside the connecting element 9. The LED 11 is actuatable by a switch 14 protruding from the convex face 15 of the connecting element 9.

The positioning device 4 comprises a plate 16 approximately semicircle-shaped, said semicircle being defined by a convex edge 18 facing the rod 3 and a straight edge 17 connected to a fixing element 19, for example made in the shape of a sleeve.

Once the sleeve 19, which is of the known type, has been placed on a tubular portion 20 of frame T of the pushchair 2, it is positioned in such a way that the plate 16 is substantially orthogonal to a road surface S on which the pushchair 2 rests and the convex edge 18 faces in a direction opposite the road surface S. The sleeve 19, once it is positioned on the tubular portion 20, is fixed there by known tightening means, for example a bolt 21. The battery 13 and the switch 14, which are indicated by a dotted line, can be arranged, instead of in the connecting element 9, in a housing 22, which is also indicated by a dotted line, obtained outside the sleeve 19. In this case, there are provided suitable electric cables, which are not shown, running inside the rod 3 and connecting the battery 13 and the switch 14 with the electronic card 10 and the LED 11.

In the plate 16 approximately hemispherical cavities 23 are obtained that are distributed in an arch near the convex edge 18. Each cavity 23 is arranged to receive a spherical element 24, forming part of a snap-locking device 40 obtained inside the proximal segment 5a. The snap-locking device 40 comprises a coil spring 26, which is received in a recess 27 together with the spherical element 24. During use, when the proximal segment 5a is in an intermediate position between two successive cavities 23, the flat surface of the plate 16 pushes the spherical element 24 inside the recess 27, which thus compresses the coil spring 26. When, through the effect of angular rotation of the rod 3 around an X axis of the hinge 30, the proximal segment 5a shifts to reach one of the cavities 23, the spherical element 24, aided by the release of the coil spring 26, may protrude from the outside of the recess 27, thus partially occupying the cavity 23. This enables the proximal segment 5a, and thus the rod 3 to be locked in a plurality of desired positions corresponding to the cavities 23 with which the plate 16 is provided. All this is obtained in a substantially rapid way and without having to exercise significant force. According to further versions that are not shown the positioning device may comprise hinges with clutches or joints with front teeth.

Owing to the positioning device 4, the partially or completely extended rod 3 can be rotated in such a way as to enable the signalling element 8 to take on at least three alternative swivelling positions, namely a first position A, a second position B and a third position C. In the first position A, the rod 3 is arranged in a manner that is substantially orthogonal to the road surface S, in such a way as to enable the signalling element 8 emitting light to indicate the presence of the pushchair by protruding above a given obstacle having a lesser vertical extent. In the second position B, the rod 3 is arranged in a manner that is substantially parallel to the road surface S and is furthermore oriented in a direction of advance F1 of the pushchair 2. The second position B is particularly useful when the pushchair 2 housing a child 29 and conducted by a user 28 (both indicated by a dotted line), after moving alongside a building 30, arrives near a road intersection I. The operating signalling device 8, being able to protrude into the road intersection I beyond the building 30, owing to the horizontally extended rod 3, is visible to a driver 31 of an approaching motor vehicle 32, for example in a travel direction that is orthogonal to the direction of advance F1. The driver 32, warned by the signalling device 8 emitting the continuous or intermittent light, is thus able to slow the speed of the motor vehicle 32 and to stop the latter in a safe condition.

In the third position C, the rod 3 is always arranged in a manner that is substantially parallel to the road surface S but is oriented in a direction F2 opposite the direction of advance F1. This position enables the signalling device 8 to be used as a rear parking light that is able to alert any vehicles coming from behind to the presence of the pushchair 2, both during the advance of the latter in the direction F1 and in the event of any reversing carried out in the direction F2.

It should be noted that although all the operations required for turning, extending and retracting the rod 3 are performable manually in a substantially rapid manner and with minimal expenditure of energy by the user, further versions of the apparatus 1 that are not shown are nevertheless provided wherein the aforementioned operations are made automatic by giving the rod 3 and the positioning device 4 a suitable motor drive. Furthermore, the apparatus 1 disclosed up to now can be suitably applied also to vehicles that are different from the pushchair 2, such as a perambulator, or a wheelchair, or a bicycle or a tricycle or any play vehicle for children, which are not shown.

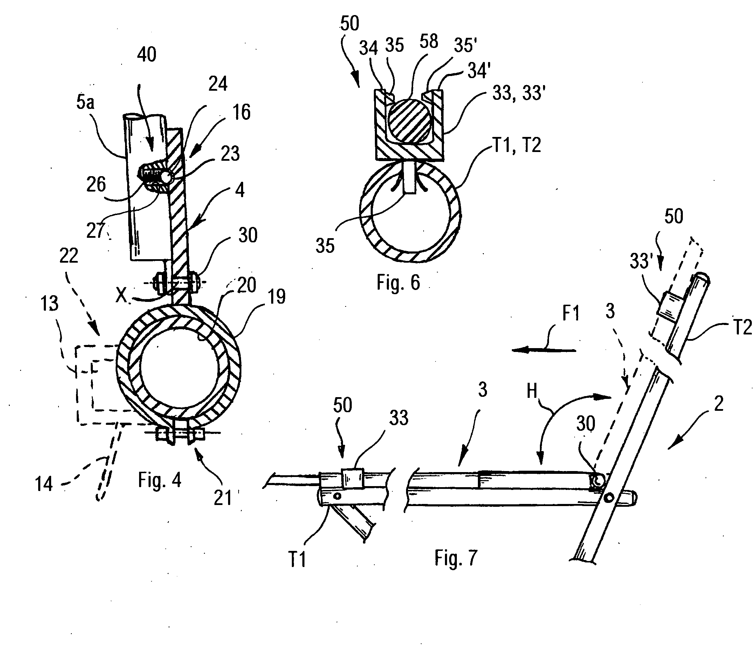

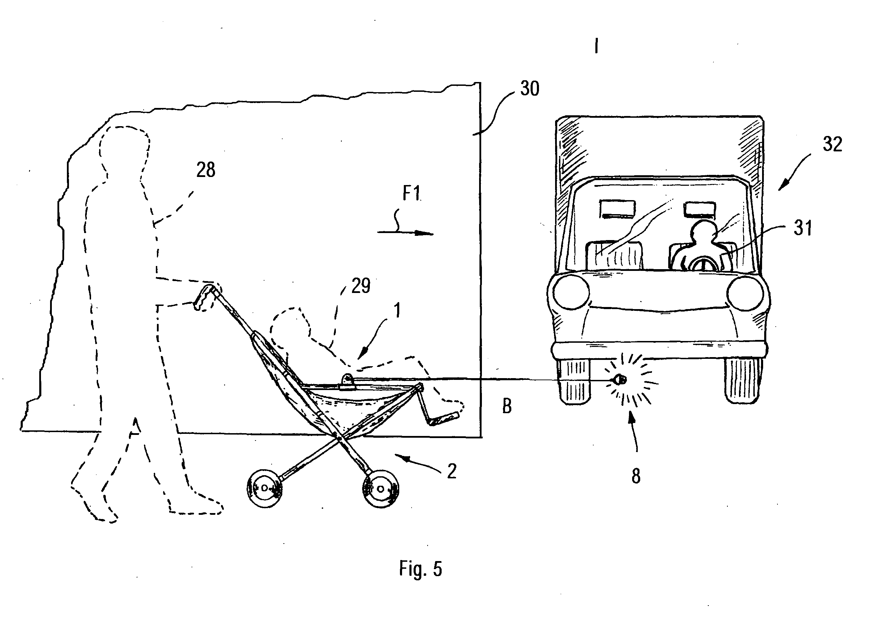

Figures 6 and 7 show a further positioning device 50, arranged to alternatively lock the rod 3 near a first portion of frame T1 substantially parallel to the direction of advance F1, or near a second portion of frame T2, arranged in a manner that is substantially oblique to the direction F1. The further positioning device 50 comprises a pair of locking elements 33, 33', each one of which is fixed to the respective portion of frame T1, T2 by means of a screw 35. Each locking element 33, 33' has a cross section approximately C-shaped and having a concavity opposite each respective portion of frame T1, T2. From a pair of free edges 34, 34' of each locking element 33, 33' a pair of abutting elements 35, 35' originates. The rod 3, hinged on a hinge 30, can be manually rotated by a user until it is arranged parallel to the portion of frame T1 or T2. Once near the portion of frame T1 or T2, it is sufficient to exert minimum pressure to snap a portion 58 of the rod 3 into the locking element 33, 33'. Owing to the abutting elements 35, 35' the portion 58 remains locked inside the locking element 33, 33', thus keeping all the rod 3 parallel to the portion of frame T1 or T2 until the user again acts on the rod 3 to modify the position thereof.

From the above it is clear that an apparatus made according to the invention enables means to be supplied that is suitable for effectively indicating, even in conditions of poor visibility, vehicles of small dimensions used for the transport of children and/or the disabled such as pushchairs, perambulators or wheelchairs.

## Claims

1. Apparatus (1), comprising rod means (3) associable with a portion (20; T1, T2) of a vehicle (2) and signalling means (8) associated with said rod means (3), **characterised in that** positioning means (4; 50) is interposed between said rod means (3) and said portion (20; T1, T2), said positioning means (4; 50) being such as to enable angular varying of a position (A, B, C) of said signalling means (8) in relation to said vehicle (2).

2. Apparatus according to claim 1, wherein said vehicle (2) is selected from a group comprising: bicycle, perambulator, pushchair, tricycle, child's play vehicle, wheelchair.

3. Apparatus according to claim 1, or 2, wherein said signalling means (8) is associated with a distal end (7) of said rod means (3), said distal end (7) being opposite said vehicle (2).

4. Apparatus according to claim 3, wherein said signalling means (8) comprises a device (8) emitting light in a continuous manner.

5. Apparatus according to claim 3, wherein said signalling means (8) comprises a device (8) emitting light in an intermittent manner.

6. Apparatus according to claim 4, or 5, wherein said device (8) is supplied by a battery.

7. Apparatus according to any preceding claim, wherein said rod means (3) is telescopic.

8. Apparatus according to any preceding claim, wherein said positioning means (4; 50) comprises a positioning device (4), comprising plate means (16).

9. Apparatus according to claim 8, wherein said plate means (16) is fixed to tubular support means (19) associable with said portion (20).

10. Apparatus according to claim 9, wherein said plate means (16) comprises hinge means (30) on which a proximal end (6) of said rod means (3) is pivoted.

11. Apparatus according to claim 9, or 10, wherein in said plate means (16) a plurality of cavity means (23) is obtained, arranged to interact with a spherical element (24) being part of snap-locking means (40).

12. Apparatus according to claim 11, wherein said snap-locking means (40) furthermore comprises coil spring means (26) received in recess means (27) obtained in a proximal portion (5a) of said rod means (3).

13. Apparatus according to claim 7, wherein said positioning means (4; 50) comprises a further positioning device (50) comprising a pair of locking elements (33, 33') associated with said portion (T1, T2).

14. Apparatus according to claim 13, wherein each of said locking elements (33, 33') is made in such a way as to snap-lock a portion (58) of said rod means (3).

15. Apparatus according to any preceding claim, wherein said position (A, B, C) is a first position (A), wherein said rod means (3) is arranged in a substantially orthogonal manner in relation to a road surface (S) on which said vehicle (2) is positioned.

16. Apparatus according to claim 15, wherein said position (A, B, C) is a second position (B), wherein said rod means (3) is arranged in a manner substantially parallel to said road surface (S) and is positioned in a direction of advance (F1) of said vehicle (2).

17. Apparatus according to claim 16, wherein said position (A, B, C) is a third position (C), wherein said rod means (3) is arranged in a substantially parallel manner in relation to said road surface (S) and is oriented in a direction (F2) opposite said direction (F1).
